# EUROPEAN PATENT APPLICATION

(11) **EP 4 652 840 A1**
(43) Date of publication of application: **26.11.2025**
(21) Application number: 24744742.8
(22) Date of filing: 19.01.2024
(51) Int. Cl.: A01N 35/02, A01N 25/02, A01N 25/18, A01N 27/00, A01N 35/06, A01N 37/06, A01N 43/20, A01P 7/02

(54) **CREATION OF ORGANIC COMPOUND DISPLAYING INSECTICIDAL ACTIVITY WITH RESPECT TO MITES**

(30) Priority: 20.01.2023 US 202363480694 P
(71) Applicant: Save Bees, Inc., Utsunomiya-Shi, Tochigi 320-0003 (JP)
(72) Inventor: OGURA, Yusuke, Tokyo 113-8654 (JP); TAKIKAWA, Hirosato, Tokyo 113-8654 (JP)
(74) Representative: D Young & Co LLP
(86) International application number: PCT/JP2024/001458
(87) International publication number: WO 2024/154822

(57) **Abstract**

The present invention relates to a miticide including a compound represented by the following Formula (1) or salts thereof.

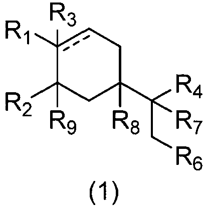

## Description

### Technical Field

The present invention relates to the creation of an organic compound that exhibits insecticidal activity against mites.

### Background Art

In recent years, infectious diseases transmitted by mites have been spreading globally, and various studies regarding miticides for exterminating mites have been conducted. For example, Patent Literature 1 discloses costic acid as a miticide substance for exterminating *Varroa* destructor, i.e., mites that parasitize honeybees.

### Citation List

### Patent Literature

Patent Literature 1: European Patent No. 2346328

### Summary of Invention

### Technical Problem

However, mites resistant to existing miticides such as costic acid described in Patent Literature 1 have appeared. Therefore, there is a demand for a novel miticide that can exterminate mites resistant to existing miticides.

An object of the present invention is to provide a novel miticide.

### Solution to Problem

The inventors have found a compound that is effective in exterminating mites resistant to existing miticides, and have completed the present invention.

The present invention is as follows.
[1]
   A miticide including a compound represented by the following Formula (1) or salts thereof: 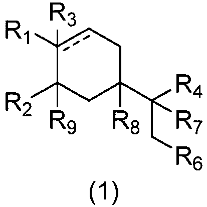 (in Formula (1),
   R₁ is absent or a hydrogen atom, R₂ is a hydrogen atom, or R₁ and R₂ form an optionally substituted 6-membered saturated carbocyclic ring together with adjacent carbon atoms,
   R₃ is a hydrogen atom or an alkyl group,
   R₄ is an optionally substituted alkyl, alkenyl, alkynyl, hydroxyalkyl, cycloalkyl, cycloalkylalkyl, aryl, heteroaryl, aralkyl, CHO or CO₂R₅ group,
   R₅ is a hydrogen atom or an optionally substituted alkyl, alkenyl, alkynyl, hydroxyalkyl, cycloalkyl, cycloalkylalkyl, aryl, heteroaryl, or aralkyl group,
   R₆ and R₇ together form a double bond or an epoxy ring,
   R₈ and R₉ are each independently a hydrogen atom or OH, and
   a dashed line is a single bond or a double bond;
   with the proviso that a structure represented by the following Formula (2) is excluded): 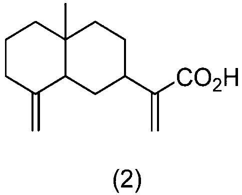
[2] The miticide according to [1],
   wherein R₃ is an alkyl group having 1 to 5 carbon atoms.
[3] The miticide according to [1] or [2],
   wherein R₄ is an optionally substituted alkyl group having 1 to 5 carbon atoms, CHO or CO₂R₅, and
   R₅ is an alkyl group having 1 to 5 carbon atoms.
[4] The miticide according to any one of [1] to [3], including a compound represented by the following Formula (3) or salts thereof: 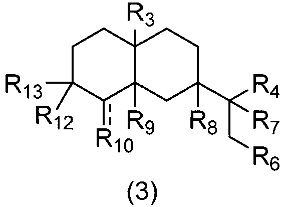 (in Formula (3),
   R₃ to R₉ have the same meaning as in the above,
   a dashed line is a single bond or a double bond,
   when the dashed line between R₁₀ and a carbon atom adjacent to R₁₀ is a single bond, R₁₀ is OH,
   when the dashed line between R₁₀ and a carbon atom adjacent to R₁₀ is a double bond, R₁₀ is an oxygen atom, CH₂, CHCHO or CHCO₂R₁₁,
   R₁₁ is a hydrogen atom or an optionally substituted alkyl, alkenyl, alkynyl, hydroxyalkyl, cycloalkyl, cycloalkylalkyl, aryl, heteroaryl or aralkyl group, and
   R₁₂ and R₁₃ are each independently a hydrogen atom or OH;
   With the proviso that a structure represented by the following Formula (2) is excluded): 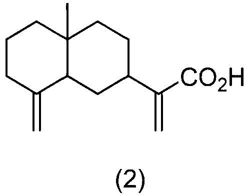
[5] A miticide including compounds represented by the following Formula (4) to Formula (12) or salts thereof: 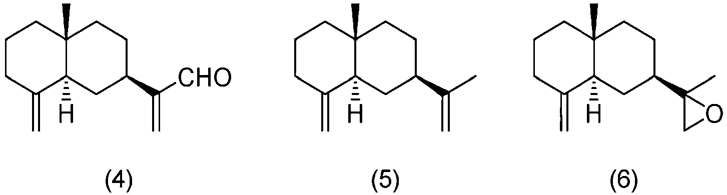 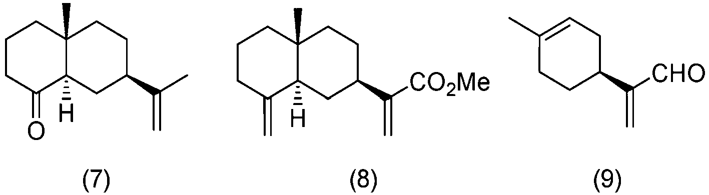 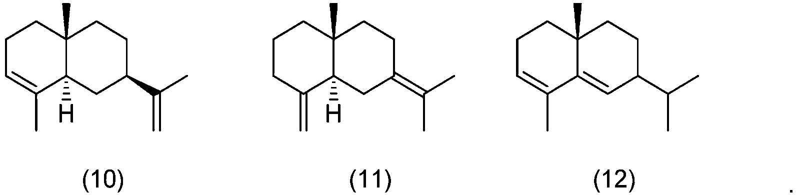
[6] The miticide according to any one of [1] to [5], wherein the target pests are *Varroa* mites or cattle mites.
[7] The miticide according to any one of [1] to [6], for use in combination with another miticide.
[8] The miticide according to [7],
   wherein the other miticide is at least one selected from the group consisting of tebufenpyrad, pyridaben, fenpyroximate, milbemectin, abamectin, chlorfenapyr, etoxazole, acequinocyl, bifenazate, spiromesifen, spirotetramat, cyflumetofen, cyenopyrafen, pyflubumide, fenpyroximate, acynonapyr, amitraz, fluvalinate, thymol, flumethrin, formic acid, oxalic acid, the compound represented by the following Formula (2) and salts of these compounds: 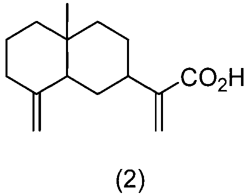
[9] A method of exterminating mites, the method including using the miticide according to any one of [1] to [8] against mites.
[10] The method of exterminating mites according to [9],
   wherein the miticide is used against mites in a vapor diffusion method or a contact method.
[11] The method of exterminating mites according to [9] or [10],
   wherein the miticide is applied to honeybees to exterminate mites parasitizing the honeybees.
[12] The method of exterminating mites according to any one of [9] to [11], which is used in combination with another miticide.
[13] The method of exterminating mites according to [12],
   wherein the other miticide is at least one selected from the group consisting of tebufenpyrad, pyridaben, fenpyroximate, milbemectin, abamectin, chlorfenapyr, etoxazole, acequinocyl, bifenazate, spiromesifen, spirotetramat, cyflumetofen, cyenopyrafen, pyflubumide, fenpyroximate, acynonapyr, amitraz, fluvalinate, thymol, flumethrin, formic acid, oxalic acid, the compound represented by the following Formula (2) and salts of these compounds:

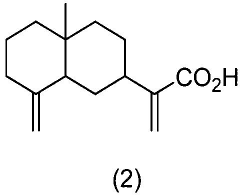

### Advantageous Effect of Invention

According to the present invention, it is possible to provide a novel miticide.

### Brief Description of Drawings

[Figure 1] Figure 1 is a diagram showing the results of examples.
[Figure 2] Figure 2 is a diagram showing the results of examples.
[Figure 3] Figure 3 is a diagram showing the results of examples.
[Figure 4] Figure 4 is a diagram showing the results of examples.
[Figure 5] Figure 5 is a diagram showing the results of examples.

### Description of Embodiments

Hereinafter, embodiments of the present invention (hereinafter referred to as "the present embodiment") will be described in detail, but the present invention is not limited thereto and can be variously modified without departing from the scope and spirit thereof.

### 1. Miticide

### 1.1. Compound represented by Formula (1) or salts thereof

A miticide of the present embodiment (hereinafter simply referred to as a "miticide") includes a compound represented by Formula (1) below or salts thereof. The compounds represented by Formula (1) below or salts thereof may be used alone or two or more thereof may be used in combination. 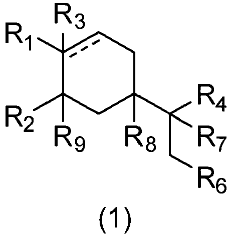 (in Formula (1),
R₁ is absent or a hydrogen atom, R₂ is a hydrogen atom, or R₁ and R₂ form an optionally substituted 6-membered saturated carbocyclic ring together with adjacent carbon atoms,
R₃ is a hydrogen atom or an alkyl group,
R₄ is an optionally substituted alkyl, alkenyl, alkynyl, hydroxyalkyl, cycloalkyl, cycloalkylalkyl, aryl, heteroaryl, aralkyl, CHO or CO₂R₅ group,
R₅ is a hydrogen atom or an optionally substituted alkyl, alkenyl, alkynyl, hydroxyalkyl, cycloalkyl, cycloalkylalkyl, aryl, heteroaryl or aralkyl group,
R₆ and R₇ together form a double bond or constitute an epoxy ring,
R₈ and R₉ are each independently a hydrogen atom or OH, and
the dashed line is a single bond or a double bond;
with the proviso that the structure represented by Formula (2) below is excluded):

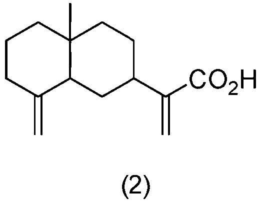

In the present embodiment, the alkyl group is a monovalent group obtained by removing one hydrogen atom from any carbon atom of an alkane group represented by CₙH₂ₙ₊₂. The alkyl group is not particularly limited, and specific examples thereof include methyl, ethyl, n-propyl, i-propyl, n-butyl, i-butyl, s-butyl, t-butyl, n-pentyl, i-pentyl, s-pentyl, t-pentyl, neopentyl, and 3-pentyl.

In the present embodiment, the alkenyl group is a monovalent group obtained by removing one hydrogen atom from any carbon atom of an alkene group represented by CₙH₂ₙ. The alkenyl group may be a group having an unsaturated carbon bond formed by removing two hydrogen atoms from an alkyl group, and may have a plurality of unsaturated carbon bonds within the group. The alkenyl group is not particularly limited, and specific examples thereof include ethenyl (vinyl), n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl, n-1-pentenyl, n-2-pentenyl, n-3-pentenyl, n-4-pentenyl, 1-n-propylethenyl, 1-methyl-1-butenyl, 1-methyl-2-butenyl, 1-methyl-3-butenyl, 2-ethyl-2-propenyl, 2-methyl-1-butenyl, 2-methyl-2-butenyl, 2-methyl-3-butenyl, 3-methyl-1-butenyl, 3-methyl-2-butenyl, 3-methyl-3-butenyl, 1,1-dimethyl-2-propenyl, 1-i-propylethenyl, 1,2-dimethyl-1-propenyl, and 1,2-dimethyl-2-propenyl.

In the present embodiment, the alkynyl group is a monovalent group obtained by removing one hydrogen atom from any carbon atom of an alkyne group represented by CₙH₂ₙ₋₂. The alkynyl group may be a group having a carbon-carbon triple bond formed by removing four hydrogen atoms from an alkyl group and may have a plurality of unsaturated carbon bonds including a carbon-carbon triple bond within the group. The alkynyl group is not particularly limited, and specific examples thereof include ethynyl, n-1-propynyl, n-2-propynyl, n-1-butynyl group, n-2-butynyl, n-3-butynyl, 1-methyl-2-propynyl, n-1-pentynyl, n-2-pentynyl, n-3-pentynyl, n-4-pentynyl, 1-methyl-n-butynyl, 2-methyl-n-butynyl, 3-methyl-n-butynyl, and 1,1-dimethyl-n-propynyl.

In the present embodiment, the hydroxyalkyl group is a group in which one or more hydrogen atoms of an alkyl group are substituted with OH. The hydroxyalkyl group is not particularly limited, and specific examples thereof include CH₂OH, CH₂CH₂OH, CH(OH)CH₃, CH₂CH₂CH₂OH, CH₂CH(OH)CH₂, CH(OH)CH₂CH₃, CH₂CH₂CH₂CH₂OH, CH₂CH₂CH(OH)CH₃, CH₂CH(OH)CH₂CH₃, CH(OH)CH₂CH₂CH₃, CH₂CH₂CH₂CH₂CH₂OH, CH₂CH₂CH₂CH(OH)CH₃, CH₂CH₂CH(OH)CH₂CH₃, CH₂CH(OH)CH₂CH₂CH₃, CH(OH)CH₂CH₂CH₂CH₃, CH(OH)CH₂OH, CH(CH₃)OH, and CH(CH₂OH)₂.

In the present embodiment, the cycloalkyl group is a monovalent group obtained by removing one hydrogen atom from any carbon atom of a cycloalkane group. The cycloalkyl group is not particularly limited, and specific examples thereof include cyclopropyl, cyclobutyl, and cyclopentyl.

In the present embodiment, the cycloalkylalkyl group is a group in which a hydrogen atom of an alkyl group is substituted with a cycloalkyl group. The cycloalkylalkyl group is not particularly limited, and specific examples thereof include cyclopropylmethyl, cyclobutylmethyl, cyclopropylethyl, and cyclopropyldimethyl.

In the present embodiment, the aryl group is a monovalent group obtained by removing one hydrogen atom from an aromatic hydrocarbon. The aryl group is not particularly limited, and specific examples thereof include phenyl, tolyl, xylyl, naphthyl, phenanthrenyl, and anthracenyl.

In the present embodiment, the heteroaryl group is a monovalent group obtained by removing one hydrogen atom from an aromatic ring containing a heteroatom. The heteroatom is not particularly limited, and specific examples thereof include B, O, N, P, Si, Se, and S. The heteroaryl group is not particularly limited, and specific examples thereof include pyrrolyl, furyl, thienyl, pyrazolyl, imidazolyl, oxazolyl, isoxazolyl, oxadiazolyl, thiazolyl, isothiazolyl, thiadiazolyl, tetrazolyl, pyridyl, furyl, pyridazinyl, pyrimidinyl, pyrazinylquinolyl, isoquinolyl, naphthyridinyl, quinoxalinyl, cinnolinyl, quinazolinyl, phthalazinyl, imidazopyridyl, imidazothiazolyl, imidazooxazolyl, benzothiazolyl, benzoxazolyl, benziimidazolyl, indolyl, isoindolyl, indazolyl, pyrrolopyridyl, thienopyridyl, propylpyridyl, benzothiadiazolyl, benzooxadiazolyl, pyridopyrimidinyl, benzofuryl, benzothienyl, benzo[1,3]dioxolyl, thienofuryl, chromenyl, chromanyl, coumarinyl, and quinolonyl.

In the present embodiment, the aralkyl is a group in which a hydrogen atom of an alkyl is substituted with an aryl group or a heteroaryl group. The aralkyl group is not particularly limited, and specific examples thereof include benzyl, and phenylethyl.

The compound represented by Formula (1) may have one or more asymmetric carbon atoms in its structural formula. The compound represented by Formula (1) may be an optical isomer or may be a mixture containing the optical isomers at any ratio.

The salt of the compound represented by Formula (1) is not particularly limited as long as it is a salt acceptable for use in agricultural or horticultural chemicals or veterinary drugs, and examples thereof include salts with inorganic acids such as hydrochlorides, sulfates, nitrates, and phosphates; salts with organic acids such as acetates, fumarates, maleates, oxalates, methanesulfonates, benzenesulfonates, and p-toluenesulfonates; and salts with inorganic or organic bases such as sodium salts, potassium salts, calcium salts, trimethylammonium salts.

In the present embodiment, the optionally substituted group is not particularly limited, and may have, for example, a halogen, an imine, an amine, a thiol, an alcohol, a ketone, a nitrile, an aldehyde, an amide, an acryl halide, an ester, carboxy, alkoxy, thioalkoxy, nitro, nitroso or the like as a substituent. For example, in the optionally substituted alkyl group, the substituent for the alkyl group is not particularly limited, and examples thereof include a halogen, an imine, an amine, a thiol, an alcohol, a ketone, a nitrile, an aldehyde, an amide, an acryl halide, an ester, carboxy, alkoxy, thioalkoxy, nitro, and nitroso.

In Formula (1), when R₂ is a hydrogen atom, the compound represented by Formula (1) is represented by Formula (1A) below. 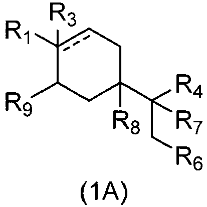 (in Formula (1A),
R₁ is absent or a hydrogen atom,
R₃ to R₉ have the same meanings as in the above, and
the dashed line is a single bond or a double bond).

In Formula (1A), it is preferable that R₁ be absent and the dashed line be a double bond. In this case, the compound represented by Formula (1) is represented by the Formula (1A') below. 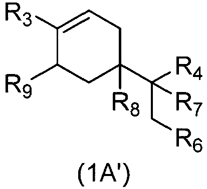 (in Formula (1A'),
R₃ to R₉ have the same meanings as in the above).

In Formula (1), when R₁ and R₂ form an optionally substituted 6-membered saturated carbocyclic ring together with adjacent carbon atoms, the compound represented by Formula (1) is represented by Formula (1B) below. 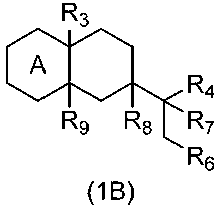 (in Formula (1B),
R₃ to R₉ have the same meanings as in the above;
with the proviso that the structure represented by Formula (2) is excluded).

In Formula (1B), a ring A may have a substituent, and examples of substituents include alkyl, alkenyl, alkynyl, hydroxyalkyl, carbonyl (=O), =CₙH₂ₙ, OH, CHO, CH₂CHO, CHCHO, CHCO₂R₁₁, CO₂R₁₄, and CH₂CO₂R₁₅.

R₁₁, R₁₄ and R₁₅ are each independently a hydrogen atom or an optionally substituted alkyl, alkenyl, alkynyl, hydroxyalkyl, cycloalkyl, cycloalkylalkyl, aryl, heteroaryl or aralkyl group.

When the substituent is CHCO₂R₁₁, R₁₁ is preferably an alkyl group having 1 to 5 carbon atoms, an alkenyl group having 2 to 5 carbon atoms or an alkynyl group having 2 to 5 carbon atoms. The alkyl group having 1 to 5 carbon atoms is preferably an alkyl group having 1 to 4 carbon atoms, more preferably an alkyl group having 1 to 3 carbon atoms, still more preferably a methyl or ethyl group, and yet more preferably a methyl group. The alkenyl group having 2 to 5 carbon atoms is preferably an alkenyl group having 2 to 4 carbon atoms, more preferably an ethenyl, n-1-propenyl, n-2-propenyl or 1-methylethenyl group, and still more preferably an ethenyl group. The alkynyl group having 2 to 5 carbon atoms is preferably an alkynyl group having 2 to 4 carbon atoms, more preferably an ethynyl, n-1-propynyl or n-2-propynyl group, and still more preferably an ethynyl group.

When the substituent is CO₂R₁₄, R₁₄ is preferably an alkyl group having 1 to 5 carbon atoms, an alkenyl group having 2 to 5 carbon atoms or an alkynyl group having 2 to 5 carbon atoms. The alkyl group having 1 to 5 carbon atoms is preferably an alkyl group having 1 to 4 carbon atoms, more preferably an alkyl group having 1 to 3 carbon atoms, still more preferably a methyl or ethyl group, and yet more preferably a methyl group. The alkenyl group having 2 to 5 carbon atoms is preferably an alkenyl group having 2 to 4 carbon atoms, more preferably an ethenyl, n-1-propenyl, n-2-propenyl or 1-methylethenyl group, and still more preferably an ethenyl group. The alkynyl group having 2 to 5 carbon atoms is preferably an alkynyl group having 2 to 4 carbon atoms, more preferably an ethynyl, n-1-propynyl or n-2-propynyl group, and still more preferably an ethynyl group.

When the substituent is CHCO₂R₁₅, R₁₅ is preferably an alkyl group having 1 to 5 carbon atoms, an alkenyl group having 2 to 5 carbon atoms or an alkynyl group having 2 to 5 carbon atoms. The alkyl group having 1 to 5 carbon atoms is preferably an alkyl group having 1 to 4 carbon atoms, more preferably an alkyl group having 1 to 3 carbon atoms, still more preferably a methyl or ethyl group, and yet more preferably a methyl group. The alkenyl group having 2 to 5 carbon atoms is preferably an alkenyl group having 2 to 4 carbon atoms, more preferably an ethenyl, n-1-propenyl, n-2-propenyl or 1-methylethenyl group, and still more preferably an ethenyl group. The alkynyl group having 2 to 5 carbon atoms is preferably an alkynyl group having 2 to 4 carbon atoms, more preferably an ethynyl, n-1-propynyl or n-2-propynyl group, and still more preferably an ethynyl group.

When the substituent is an alkyl group, it is preferably an alkyl group having 1 to 5 carbon atoms, more preferably an alkyl group having 1 to 4 carbon atoms, still more preferably an alkyl group having 1 to 3 carbon atoms, yet more preferably a methyl or ethyl group, and particularly preferably a methyl group.

When the substituent is an alkenyl group, it is preferably an alkenyl group having 2 to 5 carbon atoms, more preferably an alkenyl group having 2 to 4 carbon atoms, still more preferably an ethenyl, n-1-propenyl, n-2-propenyl or 1-methylethenyl group, and yet more preferably an ethenyl group.

When the substituent is an alkynyl group, it is preferably an alkynyl group having 2 to 5 carbon atoms, more preferably an alkynyl group having 2 to 4 carbon atoms, still more preferably an ethynyl, n-1-propynyl or n-2-propynyl group, and yet more preferably an ethynyl group.

When the substituent is a hydroxyalkyl group, it is preferably a hydroxyalkyl group having 1 to 5 carbon atoms, more preferably a hydroxyalkyl group having 1 to 4 carbon atoms, still more preferably a hydroxyalkyl group having 1 to 3 carbon atoms, and yet more preferably CH₂OH, CH₂CH₂OH or CH(OH)CH₃.

When the substituent is =CₙH₂ₙ, it is preferably =CₙH₂ₙ where n is 1 to 5, more preferably =CₙH₂ₙ where n is 1 to 4, still more preferably =CₙH₂ₙ where n is 1 to 3, yet more preferably =CH₂ or =C₂H₄, and particularly preferably =CH₂.

The substituent for the ring A is preferably an alkyl, carbonyl, =CₙH₂ₙ, or OH group, more preferably a carbonyl, =CₙH₂ₙ, or OH group, still more preferably a carbonyl or =CₙH₂ₙ group, and yet more preferably a carbonyl or =CH₂ group.

In Formula (1), when R₃ is an alkyl group, it is preferably an alkyl group having 1 to 5 carbon atoms, more preferably an alkyl group having 1 to 4 carbon atoms, still more preferably an alkyl group having 1 to 3 carbon atoms, yet more preferably a methyl or ethyl group, and particularly preferably a methyl group.

In Formula (1), R₄ is preferably an optionally substituted alkyl group having 1 to 5 carbon atoms, CHO or CO₂R₅. When R₄ is an optionally substituted alkyl group having 1 to 5 carbon atoms, R₄ is more preferably an optionally substituted alkyl group having 1 to 4 carbon atoms, still more preferably an optionally substituted alkyl group having 1 to 3 carbon atoms, yet more preferably a methyl or ethyl group, and particularly preferably a methyl group. When R₄ is CO₂R₅, R₅ is preferably an alkyl group having 1 to 5 carbon atoms, more preferably an alkyl group having 1 to 4 carbon atoms, still more preferably an alkyl group having 1 to 3 carbon atoms, yet more preferably a methyl or ethyl group, and particularly preferably a methyl group.

In Formula (1), when R₆ and R₇ together form a double bond, the compound represented by Formula (1) is represented by Formula (1C) below. 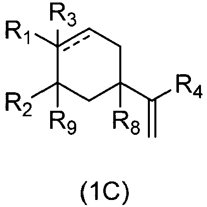 (in Formula (1C),
R₁ to R₅, R₈ to R₉ have the same meanings as in the above, and
the dashed line is a single bond or a double bond;
with the proviso that the structure represented by Formula (2) is excluded).

In Formula (1), when R₆ and R₇ together form an epoxy ring, the compound represented by Formula (1) is represented by Formula (1D) below. 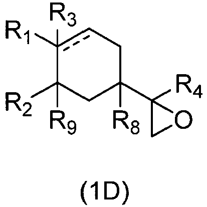 (in Formula (1D),
R₁ to R₅, R₈ to R₉ have the same meanings as in the above, and
the dashed line is a single bond or a double bond).

In Formula (1), when the dashed line is a double bond, the compound represented by Formula (1) is represented by Formula (1E) below. Here, in this case, in Formula (1), R₁ is absent, and R₂ is a hydrogen atom. 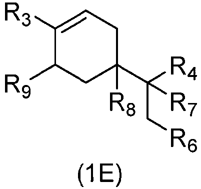 (in Formula (1E),
R₃ to R₉ have the same meanings as in the above).

In Formula (1), when the dashed line is a single bond, the compound represented by Formula (1) is represented by Formula (1F) below. Here, in this case, in Formula (1), R₁ and R₂ are each a hydrogen atom. 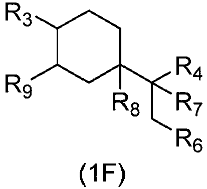 (in Formula (1F),
R₃ to R₉ have the same meanings as in the above).

In Formula (1), when R₁ and R₂ form an optionally substituted 6-membered saturated carbocyclic ring together with adjacent carbon atoms, the dashed line is a single bond, and R₆ and R₇ together form a double bond, the compound represented by Formula (1) is represented by Formula (1G) below. 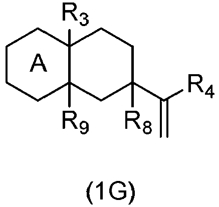 (in Formula (1G),
R₃ to R₅, R₈ to R₉ have the same meanings as in the above;
with the proviso that the structure represented by Formula (2) is excluded).

In Formula (1), when R₁ and R₂ form an optionally substituted 6-membered saturated carbocyclic ring together with adjacent carbon atoms, the dashed line is a single bond, and R₆ and R₇ together form an epoxy ring, the compound represented by Formula (1) is represented by Formula (1H) below. 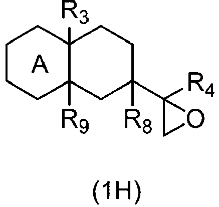 (in Formula (1H),
R₃ to R₅, R₈ to R₉ have the same meanings as in the above).

The compound represented by Formula (1B) includes preferably, for example, a compound represented by the Formula (3) below. 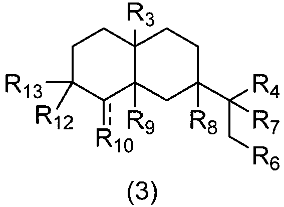 (in Formula (3),
R₃ to R₉ have the same meanings as in the above,
the dashed line is a single bond or a double bond,
when the dashed line between R₁₀ and a carbon atom adjacent to R₁₀ is a single bond, R₁₀ is OH,
when the dashed line between R₁₀ and a carbon atom adjacent to R₁₀ is a double bond, R₁₀ is an oxygen atom, CH₂, CHCHO or CHCO₂R₁₁,
R₁₁ is a hydrogen atom or an optionally substituted alkyl, alkenyl, alkynyl, hydroxyalkyl, cycloalkyl, cycloalkylalkyl, aryl, heteroaryl or aralkyl group, and
R₁₂ and R₁₃ are each independently a hydrogen atom or OH,
with the proviso that the structure represented by Formula (2) below is excluded):

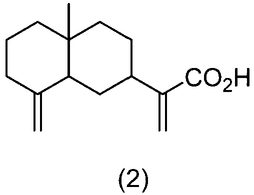

R₁₁ is preferably an alkyl group having 1 to 5 carbon atoms, an alkenyl group having 2 to 5 carbon atoms or an alkynyl group having 2 to 5 carbon atoms. The alkyl group having 1 to 5 carbon atoms is preferably an alkyl group having 1 to 4 carbon atoms, more preferably an alkyl group having 1 to 3 carbon atoms, still more preferably a methyl or ethyl group, and yet more preferably a methyl group. The alkenyl group having 2 to 5 carbon atoms is preferably an alkenyl group having 2 to 4 carbon atoms, more preferably an ethenyl, n-1-propenyl, n-2-propenyl or 1-methylethenyl group, and still more preferably an ethenyl group. The alkynyl group having 2 to 5 carbon atoms is preferably an alkynyl group having 2 to 4 carbon atoms, more preferably an ethynyl, n-1-propynyl or n-2-propynyl group, and still more preferably an ethynyl group.

When R₁ and R₂ form an optionally substituted 6-membered saturated carbocyclic ring together with adjacent carbon atoms, specific examples of compounds represented by Formula (1) include compounds represented by Formula (3A) to Formula (3F) below. 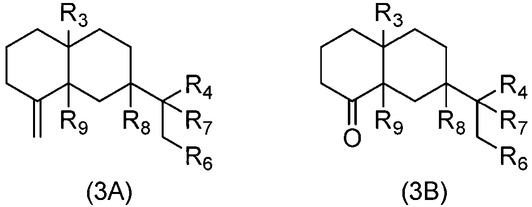 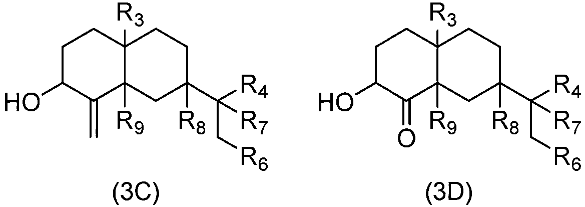 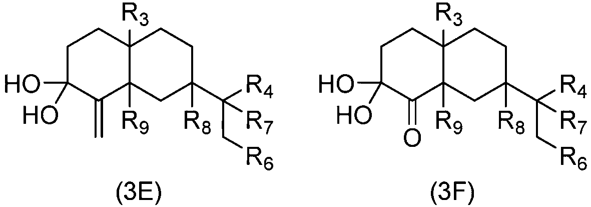 (in Formula (3A) to Formula (3F),
R₃ to R₉ have the same meanings as in the above;
with the proviso that the structure represented by Formula (2) is excluded).

More specifically, the compound represented by Formula (1) or salts thereof is preferably a compound represented by Formula (1B') or Formula (1E') below or salts thereof. 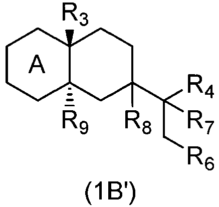 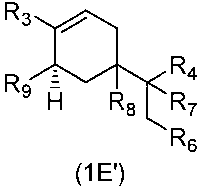 (in Formula (1B'),
R₃ to R₉ have the same meanings as in the above;
with the proviso that the structure represented by Formula (2) is excluded,
in addition, in Formula (1E'),
R₃ to R₉ have the same meanings as in the above).

In the compounds represented by the formulae described above, each group in the formula may be any combination of preferable groups, more preferable groups, still more preferable groups, yet more preferable groups, and particularly preferable groups. That is, the compounds represented by the formulae may be compounds represented by formulae having a structure in which Rₓ and Rᵥ are an arbitrary combination of groups selected from among preferable groups, more preferable groups, still more preferable groups, yet more preferable groups, and particularly preferable groups, as an example of two groups. The compounds represented by the formulae may be, for example, a compound represented by a formula in which a preferable group is selected as Rₓ, and a more preferable group is selected as Rᵥ, or may be a compound represented by a formula in which a particularly preferable group is selected as Rₓ, and a still more preferable group is selected as Rᵥ.

As the miticide of the present embodiment, more specifically, compounds represented by Formula (13) to Formula (21) below or salts thereof may be exemplified.

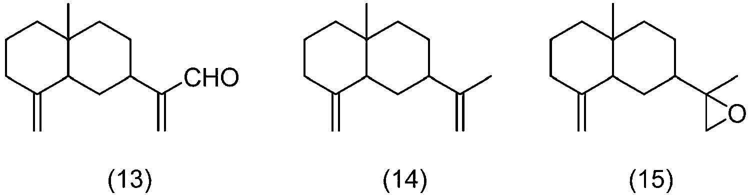

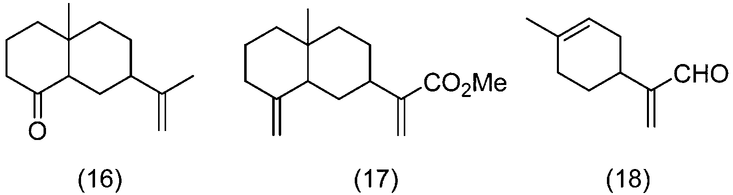

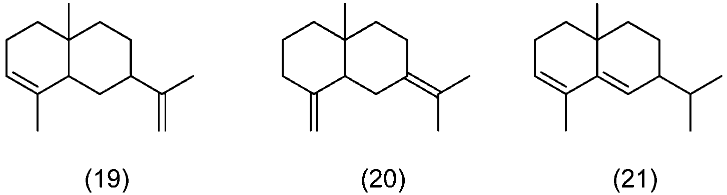

As the miticide of the present embodiment, compounds represented by Formula (13) to Formula (18) or salts thereof are preferable as the compound represented by Formula (1) or salts thereof.

As the miticide of the present embodiment, more specifically, compounds represented by Formula (4) to Formula (12) below or salts thereof may be exemplified.

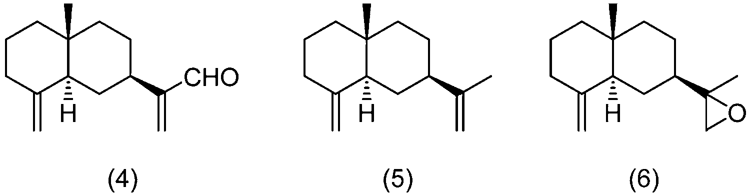

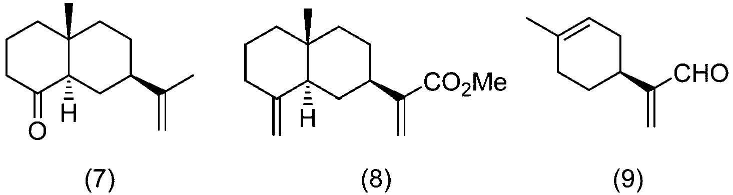

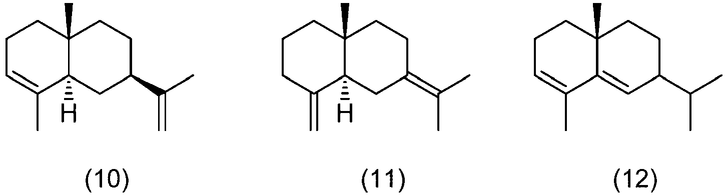

Here, when the miticide of the present embodiment contains the compound represented by Formula (5) or salts thereof and the compound represented by Formula (10) or salts thereof, the number of moles of the compound represented by Formula (5) or salts thereof with respect to the number of moles of the compound represented by (10) or salts thereof is 2 to 10, 3 to 9, or 4 to 8.

As the miticide of the present embodiment, as the compound represented by Formula (1) or salts thereof, compounds represented by Formula (4) to Formula (9) or salts thereof are preferable.

### 1.2. Method of synthesizing compound represented by Formula (1) or salts thereof

The compounds represented by Formula (1) or salts thereof are not particularly limited, and synthesized, for example, by the method described in J. Pestic. Sci. 48 (3), 111-115 (2023). In addition, among the compounds represented by Formula (1), compounds not described in the above literature can also be prepared by the method described in the above literature.

The catalyst used in the method of producing a compound represented by Formula (1) or salts thereof is not limited to those disclosed in the above literature, and examples thereof include inorganic catalysts such as zinc compounds, nickel compounds, platinum compounds, and lithium compounds; and organic catalysts such as proline and MacMillan catalysts.

The base used in the method of producing a compound represented by Formula (1) or salts thereof is not limited to those disclosed in the above literature, and examples thereof include inorganic bases such as sodium hydroxide, potassium hydroxide, sodium carbonate, potassium carbonate, sodium bicarbonate, and potassium bicarbonate; acetates such as sodium acetate and potassium acetate; alkali metal alkoxides such as potassium t-butoxide, sodium methoxide, and sodium ethoxide; tertiary amines such as triethylamine and diisopropylethylamine; and nitrogen-containing aromatic compounds such as pyridine and dimethylaminopyridine.

The solvent used in the method of producing a compound represented by Formula (1) or salts thereof is not particularly limited to those disclosed in the above literature as long as it is a solvent that does not inhibit the progress of the reaction, and examples thereof include aromatic hydrocarbons such as benzene, toluene, and xylene; halogenated aliphatic hydrocarbons such as methylene chloride, chloroform, and carbon tetrachloride; halogenated aromatic hydrocarbons such as chlorobenzene and dichlorobenzene; chain or cyclic ethers such as diethyl ether, methyl tert-butyl ether, dioxane, and tetrahydrofuran; esters such as ethyl acetate; amides such as dimethylformamide and dimethylacetamide; ketones such as acetone and methyl ethyl ketone; and polar solvents such as dimethyl sulfoxide, 1,3-dimethyl-2-imidazolidinone, and water.

In addition, in place of producing the compound represented by Formula (1) or salts thereof, commercially available products may be used without change, components extracted from plants and the like may be used without change, or those synthesized or derived from components extracted from plants and the like may be used.

### 1.3. Other compounds

The miticide of the present embodiment may contain, in addition to the compound represented by Formula (1) or salts thereof, active substances contained in existing miticides; and additives such as a solid carrier, a liquid carrier, a dispersing agent, a wetting agent, a tackifier, a thickener, an antifreezing agent, a stabilizing agent, a preservative, an antioxidant, a defoaming agent, and a light stabilizer.

The compounds that are active substances contained in existing miticides are not particularly limited, and examples thereof include tebufenpyrad, pyridaben, fenpyroximate, milbemectin, abamectin, chlorfenapyr, etoxazole, acequinocyl, bifenazate, spiromesifen, spirotetramat, cyflumetofen, cyenopyrafen, pyflubumide, fenpyroximate, acynonapyr, amitraz, fluvalinate, thymol, flumethrin, formic acid, oxalic acid, compounds represented by Formula (2) and salts of these compounds. The compounds that are active substances contained in existing miticides may be used alone or two or more thereof may be used in combination.

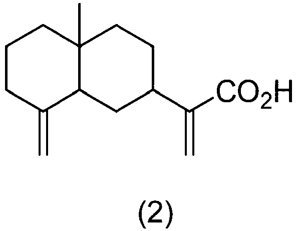

The content of the compound that is an active substance contained in the existing miticide with respect to a total amount of the miticide is preferably 1 to 30 mass%, 5 to 25 mass%, or 10 to 20 mass%. Alternatively, the miticide may not contain the compound that is an active substance contained in the existing miticide.

The solid carrier is not particularly limited, and examples thereof include natural minerals such as quartz, clay, kaolinite, pyrophyllite, sericite, talc, bentonite, acid clay, attapulgite, zeolite, and diatomaceous earth; inorganic salts such as calcium carbonate, ammonium sulfate, sodium sulfate, and potassium chloride; organic solid carriers such as synthetic silicic acid, synthetic silicate, starch, cellulose, and plant powder (for example, sawdust, coconut shell, corn cob, and tobacco leaves); plastic carriers such as polyethylene, polypropylene, and polyvinylidene chloride; and urea, inorganic hollow components, plastic hollow components, and fumed silica. The solid carriers may be used alone or two or more thereof may be used in combination.

The content of the solid carrier with respect to a total amount of the miticide is preferably 1 to 80 mass%, 5 to 70 mass%, 10 to 60 mass%, 15 to 50 mass%, 20 to 40 mass%, or 25 to 35 mass%. Alternatively, the miticide may not contain a solid carrier.

The liquid carrier is not particularly limited, and examples thereof include monohydric alcohols such as methanol, ethanol, propanol, isopropanol, and butanol; alcohols such as polyhydric alcohols, for example, ethylene glycol, diethylene glycol, propylene glycol, hexylene glycol, polyethylene glycol, polypropylene glycol, and glycerin; polyhydric alcohol compounds such as propylene glycol ether; ketones such as acetone, methyl ethyl ketone, methyl isobutylketone, diisobutylketone, and cyclohexanone; ethers such as ethyl ether, dioxane, ethylene glycol monoethyl ether, dipropyl ether, and tetrahydrofuran; aliphatic hydrocarbons such as normal paraffin, naphthene, isoparaffin, kerosene, and mineral oil; aromatic hydrocarbons such as benzene, toluene, xylene, solvent naphtha, and alkyl naphthalene; halogenated aliphatic hydrocarbons such as dichloromethane, chloroform, and carbon tetrachloride; esters such as ethyl acetate, diisopropyl phthalate, dibutyl phthalate, dioctyl phthalate, and dimethyl adipate; lactones such as γ-butyrolactone; amides such as dimethylformamide, diethylformamide, dimethylacetamide, and N-alkylpyrrolidinone; nitriles such as acetonitrile; sulfur compounds such as dimethyl sulfoxide; plant oils such as soybean oil, rapeseed oil, cottonseed oil, and castor oil; and water. The liquid carriers may be used alone or two or more thereof may be used in combination.

The content of the liquid carrier with respect to a total amount of the miticide is preferably 1 to 80 mass%, 5 to 70 mass%, 10 to 60 mass%, 15 to 50 mass%, 20 to 40 mass%, or 25 to 35 mass%. Alternatively, the miticide may not contain a liquid carrier.

The surfactant used as the dispersing agent or wetting agent is not particularly limited, and examples thereof include non-ionic surfactants such as sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkyl aryl ether, polyoxyethylene alkylphenyl ether, polyoxyethylene dialkylphenyl ether, polyoxyethylene alkylphenyl ether formalin condensates, polyoxyethylene polyoxypropylene block copolymers, polystyrene polyoxyethylene block polymers, alkylpolyoxyethylene polypropylene block copolymer ether, polyoxyethylene alkylamine, polyoxyethylene fatty acid amide, polyoxyethylene fatty acid bisphenyl ether, polyalkylene benzylphenyl ether, polyoxyalkylene styryl phenyl ether, acetylenediol, polyoxyalkylene-added acetylenediol, polyoxyethylene ether type silicone, ester type silicone, fluorine-based surfactants, polyoxyethylene castor oil, and polyoxyethylene hydrogenated castor oil; anionic surfactants such as alkylsulfate, polyoxyethylene alkyl ether sulfate, polyoxyethylene alkylphenyl ether sulfate, polyoxyethylene styryl phenyl ether sulfate, alkylbenzene sulfonate, alkylaryl sulfonate, lignosulfonate, alkyl sulfosuccinate, naphthalenesulfonate, alkyl naphthalene sulfonate, naphthalenesulfonic acid formalin condensate salts, alkyl naphthalenesulfonic acid formalin condensate salts, fatty acid salts, polycarboxylate, polyacrylate, N-methyl-fatty acid sarcosinate, resinate, polyoxyethylene alkyl etherphosphate, and polyoxyethylene alkylphenyl ether phosphate; cationic surfactants such as laurylamine hydrochloride, stearylamine hydrochloride, oleylamine hydrochloride, stearylamine acetate, stearylaminopropylamine acetate, alkyltrimethylammonium chloride, alkyldimethyl benzalkonium chloride, and alkylamine salts; and amino acid type or betaine type amphoteric surfactants.

The content of the dispersing agent and the wetting agent with respect to a total amount of the miticide is preferably 1 to 10 mass%, 2 to 9 mass%, or 3 to 8 mass%. Alternatively, the miticide may not contain a dispersing agent or a wetting agent.

The tackifier is not particularly limited, and examples thereof include carboxymethylcellulose and salts, dextrin, water-soluble starch, xanthan gum, guar gum, sucrose, polyvinylpyrrolidone, gum arabic, polyvinyl alcohol, polyvinyl acetate, sodium polyacrylate, a polyethylene glycol having an average molecular weight of 6,000 to 20,000, a polyethylene oxide having an average molecular weight of 100,000 to 5,000,000, phospholipids (for example, cephalin and lecithin), cellulose powder, dextrin, processed starch, polyaminocarboxylic acid chelate compounds, cross-linked polyvinylpyrrolidone, copolymers of maleic acid and styrenes, (meth)acrylic acid-based copolymers, half esters of polyhydric alcohol polymers and dicarboxylic acid anhydride, water-soluble salts of polystyrene sulfonic acid, paraffin, terpene, polyamide resins, polyacrylate, polyoxyethylene, wax, polyvinylalkyl ether, alkylphenol formalin condensates, and synthetic resin emulsions.

The content of the tackifier with respect to a total amount of the miticide is preferably 1 to 10 mass%, 2 to 9 mass%, or 3 to 8 mass%. Alternatively, the miticide may not contain a tackifier.

The thickener is not particularly limited, and examples thereof include water-soluble polymers such as xanthan gum, guar gum, diutan gum, carboxymethylcellulose, polyvinylpyrrolidone, carboxyvinyl polymers, acrylic polymers, starch compounds, and polysaccharides, and inorganic fine powders such as high-purity bentonite, and fumed silica.

The content of the thickener with respect to a total amount of the miticide is preferably 1 to 10 mass%, 2 to 9 mass%, or 3 to 8 mass%. Alternatively, the miticide may not contain a thickener.

The antifreezing agent is not particularly limited, and examples thereof include polyhydric alcohols such as ethylene glycol, diethylene glycol, propylene glycol, and glycerin.

The content of the antifreezing agent with respect to a total amount of the miticide is preferably 1 to 10 mass%, 2 to 9 mass%, or 3 to 8 mass%. Alternatively, the miticide may not contain an antifreezing agent.

The stabilizing agent is not particularly limited, and examples thereof include desiccating agents such as zeolite, quicklime, and magnesium oxide, antioxidants such as phenol compounds, amine compounds, sulfur compounds, and phosphate compounds, and ultraviolet absorbing agents such as salicylic acid compounds and benzophenone compounds.

The content of the stabilizing agent with respect to a total amount of the miticide is preferably 1 to 10 mass%, 2 to 9 mass%, or 3 to 8 mass%. Alternatively, the miticide may not contain a stabilizing agent.

The preservative is not particularly limited, and examples thereof include potassium sorbate and 1,2-benzothiazolin-3-one.

The content of the preservative with respect to a total amount of the miticide is preferably 1 to 10 mass%, 2 to 9 mass%, or 3 to 8 mass%. Alternatively, the miticide may not contain a preservative.

The antioxidant is not particularly limited, and examples thereof include phenol compounds, amine compounds, sulfur compounds, and phosphate compounds.

The content of the antioxidant with respect to a total amount of the miticide is preferably 1 to 10 mass%, 2 to 9 mass%, or 3 to 8 mass%. Alternatively, the miticide may not contain an antioxidant.

The light stabilizer is not particularly limited, and examples thereof include salicylic acid compounds and benzophenone compounds.

The content of the light stabilizer with respect to a total amount of the miticide is preferably 1 to 10 mass%, 2 to 9 mass%, or 3 to 8 mass%. Alternatively, the miticide may not contain a light stabilizer.

When the miticide contains other compounds, the content of the compound represented by Formula (1) or salts thereof with respect to a total amount of the miticide is preferably 10 to 95 mass%, 20 to 90 mass%, 30 to 90 mass%, 40 to 90 mass%, 50 to 90 mass%, 60 to 90 mass%, or 70 to 90 mass%. In addition, when the miticide does not contain other compounds, the miticide may be substantially composed of the compound represented by Formula (1) or salts thereof or may be composed of the compound represented by Formula (1) or salts thereof.

Here, as the miticide of the present embodiment, a perfume oil, an essential oil or the like containing the compound represented by Formula (1) or salts thereof may be used. These perfume oils and essential oils may contain other compounds described above.

### 2. Method of producing miticide

The compound represented by Formula (1) or salts thereof may be produced by the above production method and used as the miticide of the present embodiment. In addition, the compound represented by Formula (1) or salts thereof may be produced by the above production method and the compound represented by Formula (1) or salts thereof may be mixed with other compounds to produce the miticide of the present embodiment. For example, the miticide of the present embodiment may be a solvate such as a water dispersible powder or an alcohol solvate, a granule, a powder, an emulsion, a water-soluble agent, a suspension, a water dispersible granule, a flowable agent, an aerosol, a fume agent, a heat vaporizing agent, a fumigant, a poison bait, a microcapsule or the like.

### 3. Method of using miticide

The miticide of the present embodiment may be used without change or may be used after being diluted with a solvent such as water, ethanol, or acetone. The method of using the miticide of the present embodiment includes, for example, a method of spraying a miticide to plants or soil; a method of administering a miticide to livestock such as cattle, pigs, and honeybees and pets such as dogs and cats in the form of a tablet, a capsule, an immersion liquid, a feed admixture, a suppository, an injection or the like; a method of administering to livestock such as cattle, pigs, and honeybees and pets such as dogs and cats by spraying, pouring, dripping or the like; and a method of administering a miticide to livestock and pets by vaporizing the miticide and placing livestock such as cattle, pigs, and honeybees and pets such as dogs and cats in a space where the vapor exists. Here, the method of administering to livestock and pets by spraying, pouring, dripping or the like is also called a contact method. In addition, the method of administering a miticide to livestock and pets by vaporizing the miticide and placing livestock and pets in a space where the vapor exists is also called a vapor diffusion method.

The miticide of the present embodiment may be used preventively or may be used to actually exterminate mites. For example, in order to exterminate mites parasitizing livestock and pets, the miticide may be used against the mites, or the miticide may be administered to livestock and pets when the livestock and pets are not parasitized by mites.

In the present embodiment, the miticide is preferably used against mites in a vapor diffusion method or a contact method. In addition, in the present embodiment, the miticide is preferably applied to honeybees or cattle which are livestock and used against mites that parasitize honeybees or cattle. In addition, in the present embodiment, the miticide is more preferably applied to honeybees which are livestock and used against mites parasitizing honeybees. In addition, in the present embodiment, the miticide is still more preferably applied to honeybees which are livestock and used against mites parasitizing the honeybees in a vapor diffusion method or a contact method.

Here, in addition to killing mites, the actions of the miticide include, for example, inhibiting the growth or habitation of mites, preventing mite parasitizing, promoting de-parasitizing by mites, and repelling parasitizing by mites.

In addition, in the present embodiment, the use of a compound includes applying the compound to extermination targets by a conventional method and spraying the compound.

### 4. Extermination targets

Mites are extermination targets of the miticide of the present embodiment. The extermination target mites are not particularly limited, and examples thereof include two-spotted spider mites, red spider mites, Kanzawa spider mites, citrus spider mites, apple tree mites, citrus rust mites, apple rust mites, tea spider mites, mites of the genus *Brevipalpus,* mites of the genus *Eotetranycus,* bulb mites, mould mites, house dust mites, cattle ticks, long-horned ticks, ticks, *Varroa* mites, cattle mites, and larvae and eggs of these mites. Among these, the miticide of the present embodiment is preferably used against *Varroa* mites that parasitize honeybees and cattle mites that parasitize cattle. Examples of *Varroa* mites that parasitize honeybees include *Varroa* destructor mites. Examples of cattle mites that parasitize cattle include cattle ticks.

The miticide of the present embodiment has an excellent extermination effect even against mites that are drug-resistant. In addition, the miticide of the present embodiment has low toxicity to hosts parasitized by mites, and does not adversely affect these hosts. For example, when the miticide of the present embodiment is used on honeybees parasitized by drug-resistant *Varroa* mite or cattle parasitized by drug-resistant cattle mites, the *Varroa* mites or the cattle mites can be exterminated, and the miticide does not adversely affect the honeybees or cattle.

### [Examples]

Hereinafter, the present invention will be described in more detail with reference to examples and comparative examples. The present invention is not limited to the following examples. **In** addition, unless otherwise specified, experiments in examples and comparative examples were performed at room temperature (25°C) and 1 atm.

### 1. Preparation of miticide

By the method described in J. Pestic. Sci. 48 (3), 111-115 (2023), compounds represented by Formula (4) to Formula (8), Formula (10) and Formula (22) to Formula (23) below were synthesized.

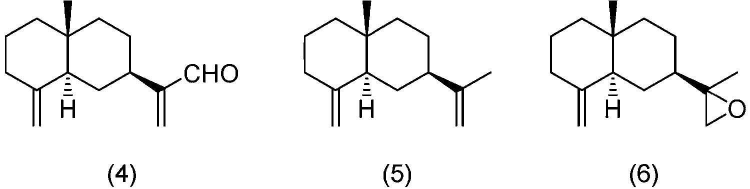

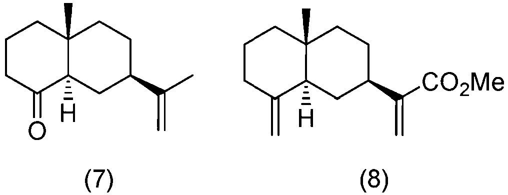

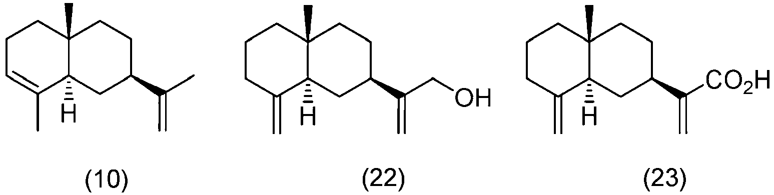

A compound represented by Formula (9) below was synthesized by using (s)-(-)-limonene (commercially available from FUJIFILM Wako Pure Chemical Corporation) and formylating it.

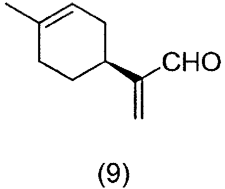

As a compound represented by Formula (24) below, a compound commercially available as Amitraz was used.

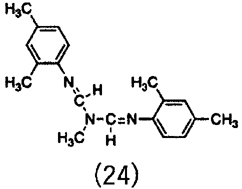

The compounds of Formula (4) to Formula (9) and Formula (32) to Formula (34) thus obtained were all subjected to a miticidal activity test to be described below as miticides. In addition, a mixture obtained by mixing the compound of Formula (5) and the compound of Formula (10) at a molar ratio of the compound of Formula (5):the compound of Formula (10)=6:1 was used as the miticide and subjected to the miticidal activity test to be described below.

### 2. Miticidal activity test

### 2.1. Vapor diffusion method

### [Example 1]

First, *Varroa* destructor mites as a plurality of *Varroa* mites were placed at the bottom of a 30 mL glass vial. Next, the compound of Formula (4) obtained as described above was dissolved in acetone so that the concentration was 10 mg/mL to obtain an acetone solution of the compound of Formula (4). 60 µL of this acetone solution was soaked into a paper filter, and the paper filter was placed in the cap of the vial. Next, the acetone was removed from the vial, and 20 µL of water was added in order to maintain the humidity in the vial. Then, the vial was sealed and left in an environment at 20°C. The time when the vial was sealed was set as 0 h, and the live or dead state of the *Varroa* destructor mites was checked every 2 hours. Specifically, the *Varroa* destructor mites were observed under a microscope, and when no movement of the legs of *Varroa* destructor mites was detected, it was determined that the *Varroa* destructor mites were dead. Then, the percentage (%) of the number of dead *Varroa* destructor mites with respect to the number of *Varroa* destructor mites initially placed was determined and taken as the mortality of *Varroa* destructor mites (*Varroa* mortality:%). Here, the *Varroa* destructor mites did not come into direct contact with the paper filter.

### [Comparative Example 1]

A miticidal activity test was performed in the same manner as in Example 1 except that the compound of Formula (22) was used in place of the compound of Formula (4) in Example 1.

### [Comparative Example 2]

A miticidal activity test was performed in the same manner as in Example 1 except that the compound of Formula (23) was used in place of the compound of Formula (4) in Example 1.

### [Example 2]

A miticidal activity test was performed in the same manner as in Example 1 except that the compound of Formula (5) was used in place of the compound of Formula (4) in Example 2.

### [Example 3]

A miticidal activity test was performed in the same manner as in Example 1 except that the compound of Formula (6) was used in place of the compound of Formula (4) in Example 3.

### [Example 4]

A miticidal activity test was performed in the same manner as in Example 1 except that the compound of Formula (7) was used in place of the compound of Formula (4) in Example 4.

### [Example 5]

A miticidal activity test was performed in the same manner as in Example 1 except that the compound of Formula (8) was used in place of the compound of Formula (4) in Example 5.

### [Example 6]

A miticidal activity test was performed in the same manner as in Example 1 except that the compound of Formula (9) was used in place of the compound of Formula (4) in Example 6.

### [Example 7]

First, a mixture was obtained by mixing the compound of Formula (5) and the compound of Formula (10) at a molar ratio of the compound of Formula (5):the compound of Formula (10)=6:1. Then, a miticidal activity test was performed in the same manner as in Example 1 except that the mixture was used in place of the compound of Formula (4) in Example 7.

### [Control Example 1-1]

In Control Example 1, a miticidal activity test was performed in the same manner as in Example 1 except that the compound of Formula (4) was not used.

### [Control Example 1-2]

In Control Example 1-2, the same test as in Control Example 1-1 was performed on a different day from that of Control Example 1-1.

### [Control Example 1-3]

In Control Example 1-3, the same test as in Control Example 1-1 was performed on a different day from those of Control Example 1-1 and Control Example 1-2.

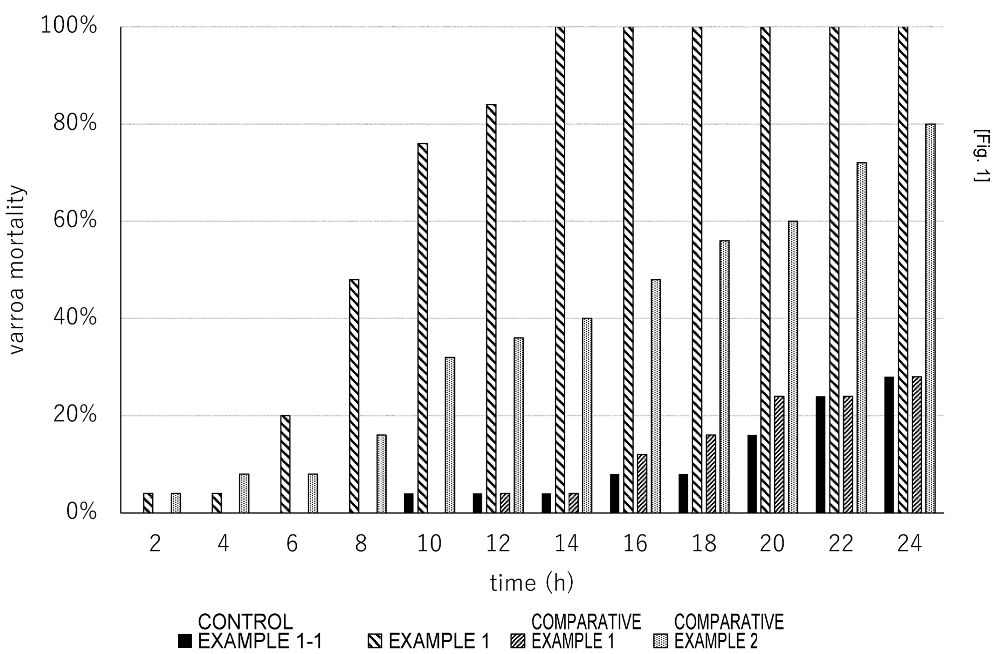

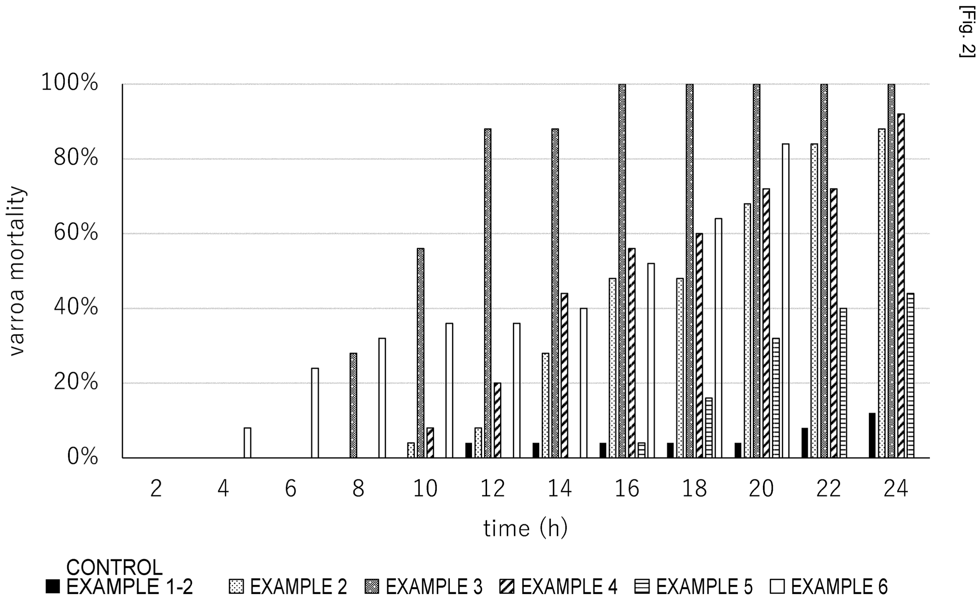

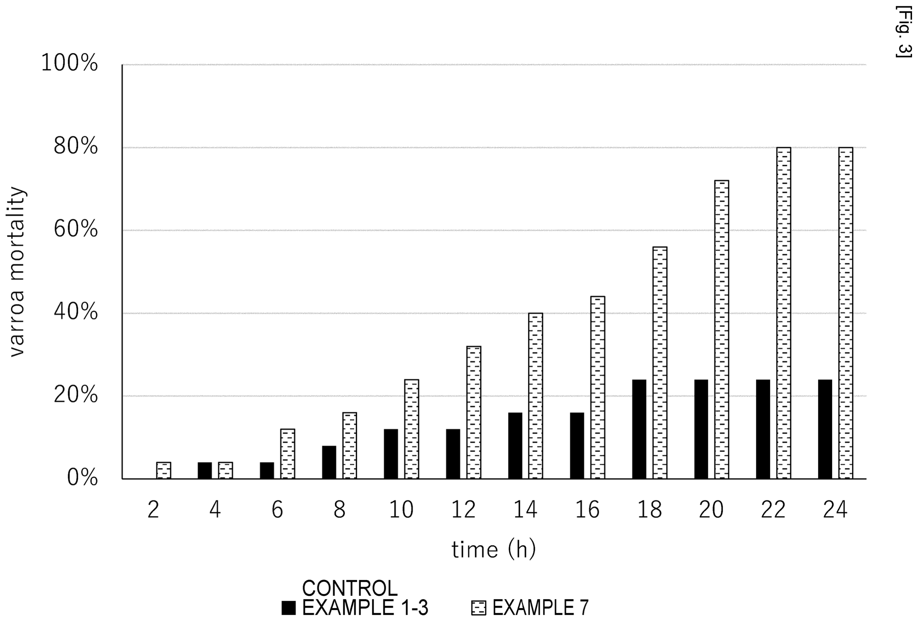

The results of Example 1, Comparative Example 1, Comparative Example 2 and Control Example 1-1 are shown in Figure 1. In addition, the results of Examples 2 to 6 and Control Example 1-2 are shown in Figure 2. In addition, the results of Example 7 and Control Example 1-3 are shown in Figure 3. Here, all the tests whose results are shown in Figure 1 were performed on the same day. In addition, all the tests whose results are shown in Figure 2 were performed on the same day. In addition, all the tests whose results are shown in Figure 3 were performed on the same day. In addition, in Example 6, the experiment was completed after 20 hours.

### 2.2. Contact method

### [Example 8]

The compound of Formula (4) obtained as described above was dissolved in acetone so that the concentration was 100 mg/L to obtain an acetone solution of the compound of Formula (4). 0.5 mL of this acetone solution was put into a 20 mL glass vial. The vial was manually rotated horizontally in a fume hood under a room temperature environment for 2 hours to completely volatilize acetone. Then, the compound of Formula (4) was uniformly precipitated on the inner wall of the vial. *Varroa* destructor mites as a plurality of *Varroa* mites were placed in the vial. Then, the vial was sealed and left in an environment at 20°C. The time when the vial was sealed was set as 0 h, and the live or dead state of the *Varroa* destructor mites was checked every 2 hours. Specifically, the *Varroa* destructor mites were observed under a microscope, and when no movement of the legs of *Varroa* destructor mites was detected, it was determined that the *Varroa* destructor mites were dead. Then, the percentage (%) of the number of dead *Varroa* destructor mites with respect to the number of *Varroa* destructor mites initially placed was determined and taken as the mortality of *Varroa* destructor mites (*Varroa* mortality:%).

### [Comparative Example 3]

In Comparative Example 3, a miticidal activity test was performed in the same manner as in Example 8 except that the compound of Formula (23) was used in place of the compound of Formula (4).

### [Comparative Example 4-1]

In Comparative Example 4-1, a miticidal activity test was performed in the same manner as in Example 8 except that the compound of Formula (24) was used in place of the compound of Formula (4).

### [Comparative Example 4-2]

In Comparative Example 4-2, the same test as in Comparative Example 4-1 was performed on a different day from that of Comparative Example 4-1.

### [Control Example 2-1]

In Control Example 2-1, a miticidal activity test was performed in the same manner as in Example 8 except that the compound of Formula (4) was not used.

### [Control Example 2-2]

In Control Example 2-2, the same test as in Control Example 2-1 was performed on a different day from that of Control Example 2-1.

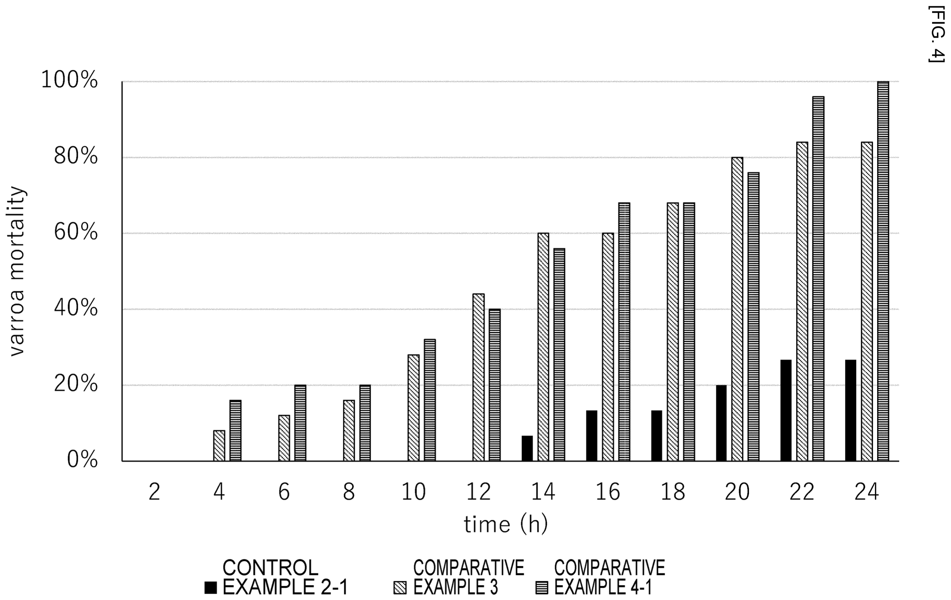

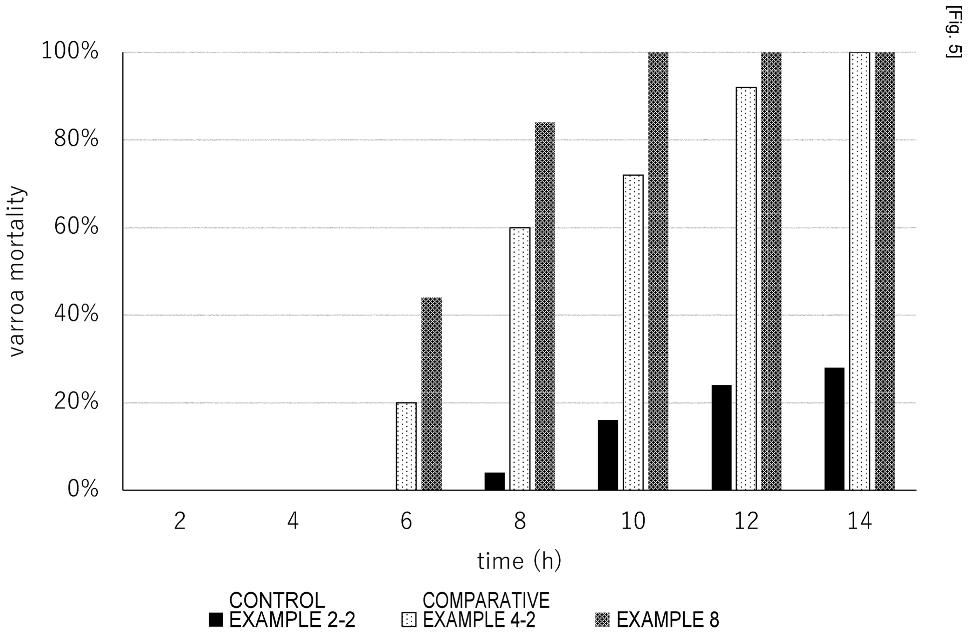

Figure 4 shows the results of Control Example 2-1, Comparative Example 3, and Comparative Example 4-1. In addition, Figure 5 shows the results of Control Example 2-2, Comparative Example 4-2, and Example 8. Here, all the tests whose results are shown in Figure 4 were performed on the same day. In addition, all the tests whose results are shown in Figure 5 were performed on the same day.

## Claims

1. A miticide comprising a compound represented by the following Formula (1) or salts thereof: 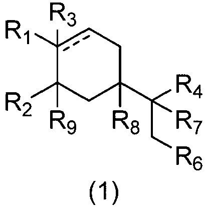 (in Formula (1),
R₁ is absent or a hydrogen atom, R₂ is a hydrogen atom, or R₁ and R₂ form an optionally substituted 6-membered saturated carbocyclic ring together with adjacent carbon atoms,
R₃ is a hydrogen atom or an alkyl group,
R₄ is an optionally substituted alkyl, alkenyl, alkynyl, hydroxyalkyl, cycloalkyl, cycloalkylalkyl, aryl, heteroaryl, aralkyl, CHO or CO₂R₅ group,
R₅ is a hydrogen atom or an optionally substituted alkyl, alkenyl, alkynyl, hydroxyalkyl, cycloalkyl, cycloalkylalkyl, aryl, heteroaryl or aralkyl group,
R₆ and R₇ together form a double bond or an epoxy ring,
R₈ and R₉ are each independently a hydrogen atom or OH, and
a dashed line is a single bond or a double bond;
with the proviso that a structure represented by the following Formula (2) is excluded):

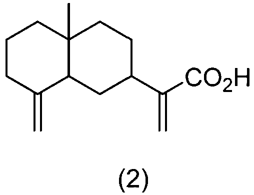

2. The miticide according to claim 1,
wherein R₃ is an alkyl group having 1 to 5 carbon atoms.

3. The miticide according to claim 1,
wherein R₄ is an optionally substituted alkyl group having 1 to 5 carbon atoms, CHO or CO₂R₅, and
R₅ is an alkyl group having 1 to 5 carbon atoms.

4. The miticide according to claim 1, comprising a compound represented by the following Formula (3) or salts thereof: 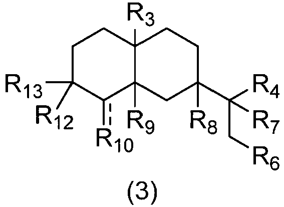 (in Formula (3),
R₃ to R₉ have the same meaning as in the above,
a dashed line is a single bond or a double bond,
when the dashed line between R₁₀ and a carbon atom adjacent to R₁₀ is a single bond, R₁₀ is OH,
when the dashed line between R₁₀ and a carbon atom adjacent to R₁₀ is a double bond, R₁₀ is an oxygen atom, CH₂, CHCHO or CHCO₂R₁₁,
R₁₁ is a hydrogen atom or an optionally substituted alkyl, alkenyl, alkynyl, hydroxyalkyl, cycloalkyl, cycloalkylalkyl, aryl, heteroaryl or aralkyl group, and
R₁₂ and R₁₃ are each independently a hydrogen atom or OH,
with the proviso that a structure represented by the following Formula (2) is excluded):

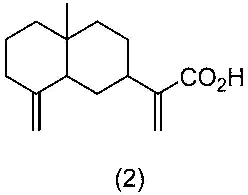

5. A miticide comprising compounds represented by the following Formula (4) to Formula (12) or salts thereof:

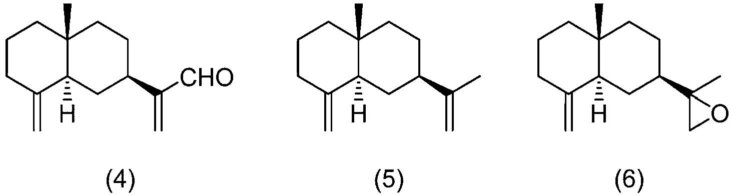

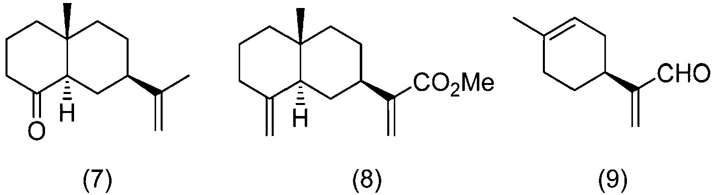

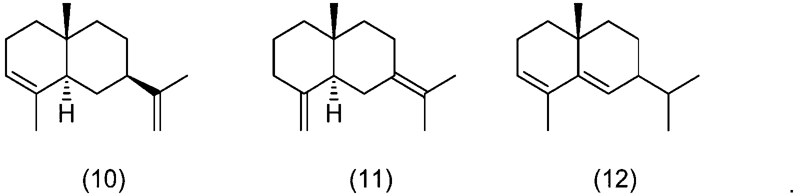

6. The miticide according to claim 1, wherein the target pests are *Varroa* mites or cattle mites.

7. The miticide according to claim 1, for use in combination with another miticide.

8. The miticide according to claim 7,
wherein the other miticide is at least one selected from the group consisting of tebufenpyrad, pyridaben, fenpyroximate, milbemectin, abamectin, chlorfenapyr, etoxazole, acequinocyl, bifenazate, spiromesifen, spirotetramat, cyflumetofen, cyenopyrafen, pyflubumide, fenpyroximate, acynonapyr, amitraz, fluvalinate, thymol, flumethrin, formic acid, oxalic acid, the compound represented by the following Formula (2) and salts of these compounds:

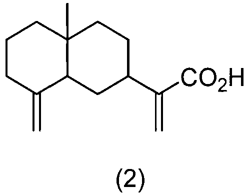

9. A method of exterminating mites, the method comprising using the miticide according to any one of claims 1 to 8 against mites.

10. The method of exterminating mites according to claim 9,
wherein the miticide is used against mites in a vapor diffusion method or a contact method.

11. The method of exterminating mites according to claim 9,
wherein the miticide is applied to honeybees to exterminate mites parasitizing the honeybees.

12. The method of exterminating mites according to claim 9, which is used in combination with another miticide.

13. The method of exterminating mites according to claim 12,
wherein the other miticide is at least one selected from the group consisting of tebufenpyrad, pyridaben, fenpyroximate, milbemectin, abamectin, chlorfenapyr, etoxazole, acequinocyl, bifenazate, spiromesifen, spirotetramat, cyflumetofen, cyenopyrafen, pyflubumide, fenpyroximate, acynonapyr, amitraz, fluvalinate, thymol, flumethrin, formic acid, oxalic acid, the compound represented by the following Formula (2) and salts of these compounds:
